# EUROPÄISCHE PATENTSCHRIFT

(11) **EP 4 121 192 B1**
(45) Veröffentlichungstag und Bekanntmachung des Hinweises auf die Patenterteilung: **28.02.2024**
(21) Anmeldenummer: 20841908.5
(22) Anmeldetag: 18.12.2020
(51) Int. Cl.: B01D 46/00, B01D 46/10, B01D 46/42, B01D 46/52

(54) **ABSCHEIDEELEMENT, FILTERSYSTEM SOWIE VERFAHREN ZUR HERSTELLUNG EINES ABSCHEIDEELEMENTS**
SEPARATING ELEMENT, FILTER SYSTEM, AND METHOD FOR PRODUCING A SEPARATING ELEMENT
ÉLÉMENT DE SÉPARATION, SYSTÈME DE FILTRAGE, ET PROCÉDÉ DE PRODUCTION D'UN ÉLÉMENT DE SÉPARATION

(30) Priorität: 17.03.2020 DE 102020107345
(43) Veröffentlichungstag der Anmeldung: 25.01.2023
(73) Patentinhaber: MANN+HUMMEL LIFE SCIENCES & ENVIRONMENT HOLDING SINGAPORE PTE. LTD., Singapore 139234 (SG)
(72) Erfinder: PRICE, Andrew, 58256 Ennepetal (DE)
(74) Vertreter: Mann + Hummel Intellectual Property
(86) Internationale Anmeldenummer: PCT/EP2020/087045
(87) Internationale Veröffentlichungsnummer: WO 2021/185476

(56) Entgegenhaltungen:
- EP-A1- 0 067 115
- WO-A1-2008/055971
- DE-A1- 3 405 719
- GB-A- 2 264 072
- KR-U- 20120 007 245

## Beschreibung

### Technisches Gebiet

Die Erfindung betrifft ein Abscheideelement nach dem Oberbegriff des Anspruchs 1 sowie ein Filtersystem nach dem Oberbegriff des Anspruchs 10. Die vorliegende Erfindung betrifft des Weiteren ein Verfahren nach dem Oberbegriff des Anspruchs 11.

Die vorliegende Erfndung betrifft insbesondere einen Koaleszenz-Filter zum Einsatz in ein Filtersystem zur Verwendung in Fabriken zur Abscheidung von Ölaerosolen aus der Abluft von Maschinen und Bearbeitungsprozessen unterschiedlicher Anwendungsbereiche wie etwa Spanen, Umformen, Walzen und Pressen, Schleifen und Härten. Beispielsweise betrifft die vorliegende Erfndung einen Koaleszenz-Filter zum Einsatz in ein Filtersystem zur Abscheidung von Ölaerosolen aus der Abluft von zerspanenden Fertigungsmaschinen, etwa von Fräsmaschinen oder Drehmaschinen.

### Stand der Technik

Bei zerspanenden Fertigungsmaschinen wird beim Abtragen von Material Kühlschmiermittel auf die Schneide aufgebracht. Dieses Kühlschmiermittel verdampft an der Schneide oder wird durch die Drehbewegungen der Schneide zerstäubt, wobei ein feiner, ölhaltiger Flüssigkeitsnebel, ein Ölaerosol, entsteht. Des Weiteren kann bei der Bearbeitung mit Fertigungsmaschinen ein Trennmitteldämpfe aufweisendes Ölaerosol entstehen, wenn beispielsweise Trennmittel in die offenen Formhälften von Blasformteilen, sogenannten Blowmoldingwerkzeugen, eingesprüht werden.

Dieses Ölaerosol ist gesundheitsgefährdend für die Anwender, welche die Fertigungsmaschinen bedienen, da die feinen Partikel lungengängig sein können. Zudem führt ein freier Austritt von Ölaerosol zur Verschmutzung der Umgebung und steigert das Unfallrisiko, da der sich absetzende Flüssigkeitsnebel auf Oberflächen, wie etwa Fußböden, einen schmierigen Film bildet. Dieser Film kann sich auch auf den bearbeiteten Bauteilen bilden, die dadurch wieder verschmutzen können, was zu zusätzlichem Reinigungsaufwand führt.

Damit die Aerosolpartikel nicht unkontrolliert aus dem Bearbeitungsraum austreten und Menschen, Umwelt und Anlagen geschützt sind, werden die Bearbeitungsräume von Fertigungsmaschinen abgesaugt, sozusagen evakuiert. Zum Abscheiden der Aerosolpartikel aus der abgesaugten Abluft dienen Aerosolabscheider. Diese Aerosolabscheider können einer Fertigungsmaschine zugeordnet sein oder die Abluft mehrerer Fertigungsmaschinen reinigen.

Ein derartiges Filtersystem ist auf der Internetseite von Mann und Hummel https://airfiltration.mann-hummel.com/our-solutions/oil-mist-filters/europe/ sowie in der auf dieser Internetseite herunterladbaren Broschüre "ScandMist Industrielle Emulsions- und Ölnebelabscheider" beschrieben. Dieser industrielle Emulsions- und Ölnebelabscheider entfernt Dämpfe, Emissionen und andere schädliche Nebenprodukte von metallverarbeitenden Verfahren mit Hilfe eines dreistufigen Filtrationsprozesses.

Des Weiteren sind Filtergeräte zum Reinigen der Abluft von Maschinen und Bearbeitungsprozessen unterschiedlicher Anwendungsbereiche auf der Internetseite https://absolent.com/ beschrieben.

Filterrahmen für die Luftfilterindustrie sind beispielsweise auf der Internetseite https://moeller-profilsysteme.de/produktvielfalt/filterrahmensysteme/ offenbart.

Die Druckschrift WO 2016/159848 A1 offenbart einen Aerosolabscheider zum Einsatz in ein Filtersystem zum Abscheiden von Ölnebel aus der Abluft, die bei der Metallbearbeitung in der Automobilindustrie anfällt, insbesondere bei MQL-Anwendungen (minimal quantitaty lubrication).

Des Weiteren ist aus der Druckschrift WO 2016/159848 A1 ein mehrstufiger Aerosolabscheider zum Abscheiden von Öl und/oder Ölaerosol aus der Abluft von einer Fertigungsmaschinen bekannt. Der Aerosolabscheider weist einen Koaleszenz-Filter mit einem gefalteten Filtermedium auf.

Bei einem bestimmten Verschmutzungsgrad des Filtermediums muss der Aerosolabscheider im Filtersystem ausgewechselt werden. Um den Aerosolabscheider aus dem Filtersystem herauszuziehen und eventuell ein kurzes Stück, bis zu einem Palettenwagen zu tragen und dort abzustellen, kann der Aerosolabscheider einen Griff aufweisen. Dieser Griff ist, wie in Figur 11 sowie in der Druckschrift US2006150589A gezeigt, im Stand der Technik ein an den Filterrahmen angeschraubter Beschlag. Dies kann dazu führen, dass der Rahmen sich bei der Handhabung des Griffs verzieht, weil das gesamte Gewicht des Abscheideelements an der Verbindungsstelle zwischen Rahmen und Griff lastet.

Die Druckschrift US2020086262A offenbart als Griffelemente von der Filterkassette wegragende Zungen, welche ein am Rahmen des Abscheideelements befestigtes Ende und ein offenes Ende aufweisen.

Die EP 0067115 A1 offenbart ein quaderförmiges Filterelement mit Rahmen, wobei zwischen Faltenbalg und Rahmen ein zu einer Schlaufe geformtes Griffband angeordnet ist.

Der Erfindung liegt die Aufgabe zugrunde, ein Abscheideelement der eingangs genannten Art sowie ein Verfahren der eingangs genannten Art derart weiterzuentwickeln, dass das Abscheideelement umweltfreundlich und kostengünstig herstellbar sowie entsorgbar ist. Vor allem soll der Rahmen des Abscheideelements ein möglichst geringes Gewicht aufweisen, einfach zusammenbaubar sein und dennoch der Verbund aus Filtermedium und Rahmen mittels des am Rahmen befestigten Griffs handhabbar sein.

### Offenbarung der Erfindung

Diese Aufgabe wird durch ein Abscheideelement mit den im Anspruch 1 angegebenen Merkmalen, durch ein Filtersystem mit den im Anspruch 10 angegebenen Merkmalen sowie durch ein Verfahren mit den im Anspruch 11 angegebenen Merkmalen gelöst. Vorteilhafte Ausgestaltungen und zweckmäßige Weiterbildungen der vorliegenden Erfindung sind in den jeweiligen abhängigen Ansprüchen gekennzeichnet.

Mithin basiert die vorliegende Erfindung darauf, dass das Griffelement mindestens ein langes, schmales, geschlossenes Griffband ist, welches derart um das Filtermedium angeordnet ist, dass bei der Handhabung des Verbunds aus Filtermedium und Rahmen das Griffband das Gewicht des Filtermediums stützt. Das Griffband läuft also nach Art eines Spanngurtes direkt oder indirekt um das Filtermedium herum, ist dann wieder mit sich selbst verbunden und ist dazu ausgebildetet, die Last des Filtermediums zu stützen, beispielsweise zumindest kurzweilig zu tragen.

Der Rahmen stützt das Filtermedium und verhindert, dass dieses aufgrund des Gewichts durch die Ölabsorption während dem Betrieb des Filtermediums auseinanderfällt.

Vorteilhafterweise ist das Griffband an zwei einander gegenüberliegenden Kantenbereichen oder Ecken des quaderförmigen Rahmens befestigt. Zur Befestigung kann das Griffband beispielsweise zwischen zwei Rahmenelementen, insbesondere zwischen zwei benachbarten Seitenflächen des Rahmens, eingespannt oder festgeklemmt sein.

Vorteilhafterweise weist der Rahmen mindestens ein Hohlprofil mit mindestens einem inneren Hohlraum auf, wobei das Griffband innerhalb des Hohlraums um das Filtermedium herum verläuft. Dabei kann der Rahmen beispielsweise doppelwandig ausgebildet sein.

Um das Griffband im Hohlprofil des Rahmens aufzunehmen, weist der Rahmen vorteilhafterweise
- mindestens eine Eintrittsöffnung auf, an welcher das Griffband von außen in den Hohlraum des Rahmens eintritt, und
- mindestens eine Austrittsöffnung auf, an welcher das Griffband vom inneren Hohlraum des Rahmens aus nach außen tritt.
Dabei können die Eintrittsöffnung und die Austrittsöffnung zur Befestigung des Griffbands am Rahmen ausgebildet sein. Beispielsweise kann das Griffband an der Eintrittsöffnung sowie an der Austrittsöffnung in den Rahmen eingespannt oder am Rahmen festgeklemmt sein.

Um ein Greifen des Griffbands zu ermöglichen, weist das Griffband neben dem im Hohlprofil angeordneten Bereich auch einen außerhalb des Rahmens angeordneten Bereich auf. Dieser freiliegende Bereich des Griffbands liegt vorteilhafterweise derart locker am Rahmen an, dass er, beispielsweise von einer Hand, gegriffen werden kann.

Der Rahmen kann aus einzelnen, insbesondere mittels mindestens einer formschlüssigen Verbindung, lösbar miteinander verbindbaren Seitenflächen zusammengesetzt sein. Beispielsweise kann der Rahmen zum Verbinden seiner Seitenflächen mindestens ein Adapterelement aufweisen, das zwei rechtwinklig zueinander angeordnete Enden hat. Diese Enden des Adapterelements sind vorteilhafterweise jeweils mit einer Rahmenseitenfläche zur Herstellung einer formschlüssigen Verbindung, beispielsweise einer Schnappverbindung oder einer Clipverbindung, in Eingriff bringbar.

Der quaderförmige Rahmen kann beispielsweise an seinen rechtwinkligen Kanten jeweils in Einzelteile zerlegbar sein. Als Adapterelemente zum Verbinden der Seitenflächen des quaderförmigen Rahmens können Eckverbinder genutzt werden. Dabei sind die Adapterelemente vorteilhafterweise in dem Hohlprofil des Rahmens anordbar und somit von außen unsichtbar.

Bei einem lösbar zusammensetzbaren Rahmen ist das erfindungsgemäß um das Filtermedium angeordnete Griffband besonders vorteilhaft, weil dieses beim Ziehen oder beim Tragen des Abscheideelementes das Gewicht des Filtermediums stützt. Somit trägt beim Abscheideelement der vorliegenden Erfindung der Rahmen eine deutlich geringere Last, als beim Stand der Technik, bei welchem der Handgriff ausschliesslich am Rahmen angeordnet ist.

Um dem Rahmen zusätzliche Stabilität zu verleihen bzw. die einzelnen Rahmenteile zusammenzuhalten, kann das Griffband durch ein Hohlprofil des Rahmens geführt sein. Der Rahmen kann beispielsweise ein hohles, im Längsschnitt U-förmiges Hohlprofil aufweisen.

Zum Abfangen von einem Stoß oder einem Anprall eines anderen Gegenstandes auf den Rahmen kann dieser mindestens ein Stoßfängerelement aufweisen. Dieses Stoßfängerelement ist insbesondere vorteilhaft, wenn in einem Filtersystem mehrere Abscheideelemente mit einem definierten Abstand aufeinanderfolgend angeordnet sind. Vorteilhafterweise ist das Stoßfängerelement lösbar mit dem Rahmen verbunden. Beispielsweise kann das Stoßfängerelement mittels eines Klettverschlusses am Rahmen angeordnet sein.

Um eine möglichst umweltfreundliche sowie kostengünstige Entsorgung des Rahmens zu ermöglichen, ist der Rahmen vorteilhafterweise aus metallfreiem, veraschbarem Material. Beispielsweise kann der Rahmen zumindest im Wesentlichen Kunststoff, insbesondere Polystyrol, beispielsweise extrudierten Kunststoff, etwa extrudiertes Polystyrol, aufweisen. Alternativ zu Kunststoff kann der Rahmen auch aus Holz, aus Presspappe, aus mitteldichtem Holzfaserplattenmaterial (MDF), oder aus gepresstem Fasermaterial aus Bambus und/oder Stroh und/oder Kokosnuss, welches mit Wachs beschichtet oder versiegelt ist, sein. Die Herstellung des Rahmens aus veraschbarem Material ermöglicht dessen Entsorgung über thermisch verwertbaren Industrieabfall und eine Energierückgewinnung bei der Veraschung des Rahmens bei seiner Entsorgung. Veraschbar bedeutet in diesem Zusammenhang, dass sich nach dem Verbrennen des Materials in der Asche nur noch ein für die thermische Verwertung akzeptabler Anteil an unverbrannten Teilen befindet

Die vorgenannten metallfreien Materialien haben im Vergleich zu Stahl, welches üblicherweise im Stand der Technik für den Rahmen eingesetzt wird, neben dem Vorteil der Veraschbarkeit zudem den Vorteil, dass sie deutlich leichter sind. Das geringere Gewicht des Rahmenmaterials erhöht die Ergonomie für den Benutzer beim Wechsel des Abscheideelementes. Zudem reduziert ein geringeres Rahmengewicht die Abgasemissionen beim Transport des Abscheideelementes.

Auch das Griffband ist vorteilhafterweise aus veraschbarem Material, beispielsweise aus textilem Material.

Besonders bevorzugterweise ist das gesamte Abscheideelement aus metallfreiem, voll veraschbarem Material gebildet. Dabei kann beispielsweise ein nach dem Koaleszenz-Prinzip arbeitendes Filtermedium aus synthetischem Material, insbesondere aus Vlies, und/oder aus glasfaserhaltigem Material sein. Beispielsweise kann das Filtermedium ein gefaltetes, mehrschichtiges Vliesmedium oder ein gefaltetes, mehrschichtiges Glasfasermedium oder eine Kombination aus synthetischem Medium und Gasfasermedium sein. Wenn alle Komponenten des Abscheideelements aus veraschbarem Material sind, kann das gesamte Abscheideelement als thermisch verwertbaren Industrieabfall entsorgt werden. Somit ist es nicht notwendig vor der Entsorgung als thermisch verwertbarem Industrieabfall irgendwelche Komponenten vom Abscheideelement abzutrennen.

Die vorliegende Erfindung betrifft schließlich die Verwendung eines Abscheideelements gemäß der vorstehend dargelegten Art und/oder eines nach dem Verfahren der vorstehend dargelegten Art hergestellten Abscheideelements in einem Filtersystem der vorstehend dargelegten Art, zum Abscheiden von Öl und/oder Ölaerosol aus der Abluft mindestens einer Fertigungsmaschine, insbesondere einer zerspanenden Fertigungsmaschine.

### Kurze Beschreibung der Zeichnungen

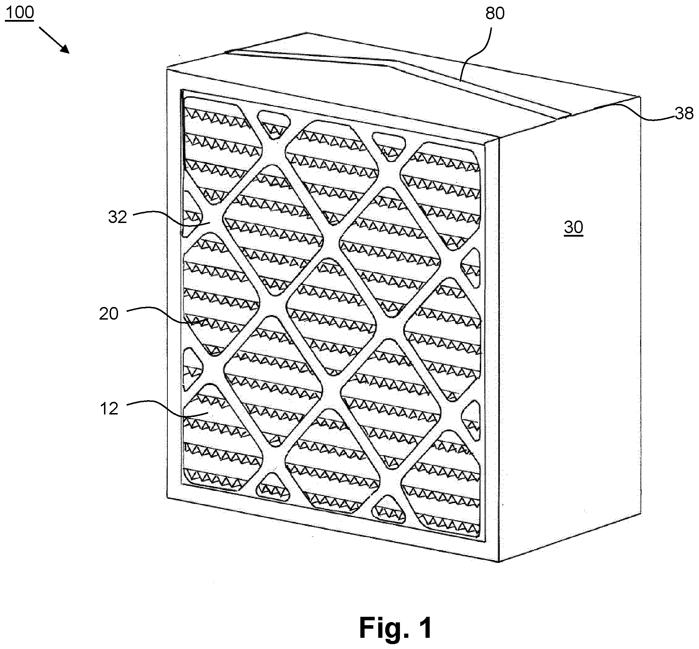

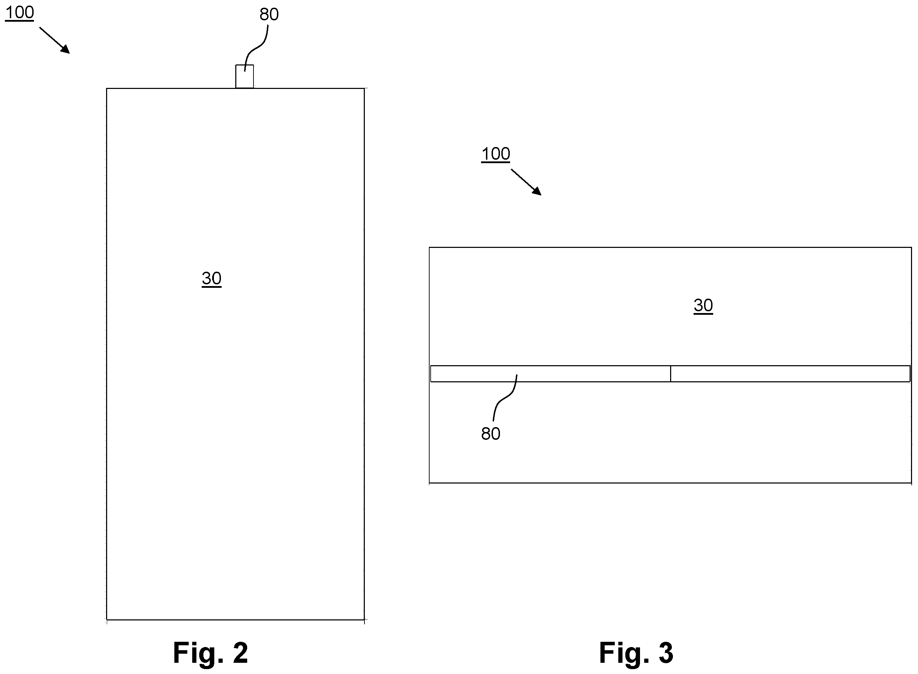

Wie bereits vorstehend erörtert, gibt es verschiedene Möglichkeiten, die Lehre der vorliegenden Erfindung in vorteilhafter Weise auszugestalten und weiterzubilden. Hierzu wird einerseits auf die dem Anspruch 1 sowie dem Anspruch 11 nachgeordneten Ansprüche verwiesen, andererseits werden weitere Ausgestaltungen, Merkmale und Vorteile der vorliegenden Erfindung nachstehend unter anderem anhand der durch die Figuren 1 bis 10 veranschaulichten Ausführungsbeispiele näher erläutert.

Es zeigt:
Fig. 1 ein erstes Ausführungsbeispiel eines Abscheideelements gemäß der vorliegenden Erfindung, das nach dem Verfahren gemäß der vorliegenden Erfindung hergestellt ist;
Fig. 2 eine Seitenansicht des Abscheideelements aus Figur 1;
Fig. 3 eine Ansicht von oben auf das Abscheideelement aus Figur 1;
Fig. 4 den Verlauf des Griffbands an der Vorderseite des Rahmens des Abscheideelements aus Figur 1 beim Zusammenbau des Rahmens;
Fig. 5 die Anordnung des Griffbands im Hohlprofil zweier Rahmenseitenflächen des Abscheideelements aus Figur 1 beim Zusammenbau des Rahmens;
Fig. 6 in isometrischer Darstellung die Vorderseite des Rahmens des Abscheideelements aus Figur 1 beim Zusammenbau des Rahmens;
Fig. 7 in isometrischer Darstellung die Vorderseite des Rahmens des Abscheideelements aus Figur 1 beim zusammengebauten Rahmen;
Fig. 8 ein auf der Vorderseite des Rahmens des Abscheideelements aus Figur 1 lösbar befestigbares Stoßelement;
Fig. 9 in schematischer Darstellung ein erstes Ausführungsbeispiel für ein Filtersystem gemäß der vorliegenden Erfindung;
Fig. 10 ein zweites Ausführungsbeispiel für ein Filtersystem gemäß der vorliegenden Erfindung und
Fig. 11 ein Ausführungsbeispiel für ein Filtersystem gemäß dem Stand der Technik.

Gleiche oder ähnliche Ausgestaltungen, Elemente oder Merkmale sind in den Figuren 1 bis 11 mit identischen Bezugszeichen versehen.

### Ausführungsform(en) der Erfindung

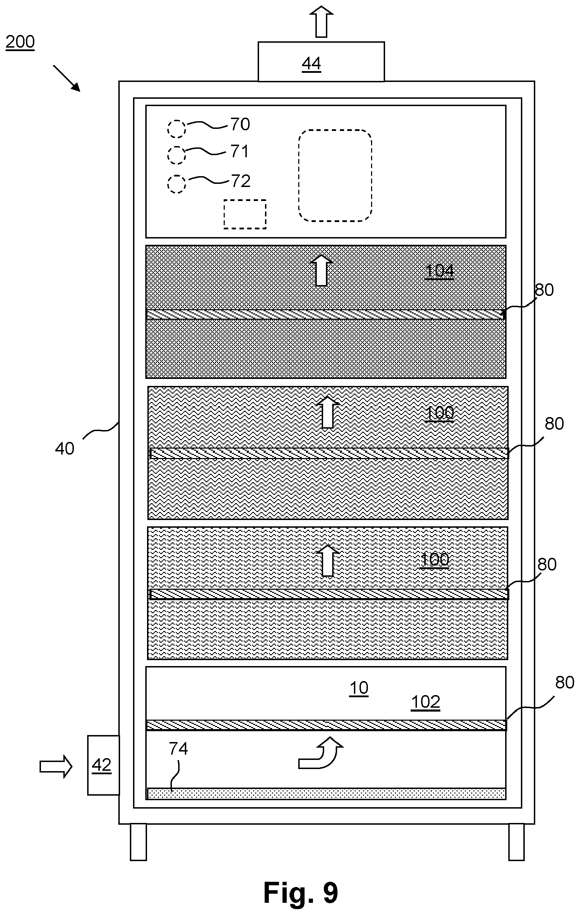

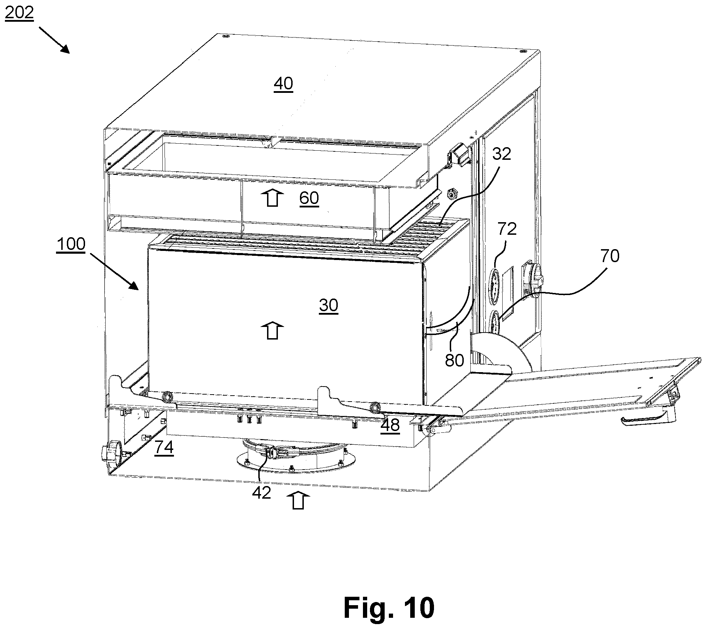

Figur 1 zeigt die Vorderseite eines ersten Ausführungsbeispiels eines Abscheideelements 100 gemäß der vorliegenden Erfindung, das nach dem Verfahren gemäß der vorliegenden Erfindung hergestellt ist. In Figur 9 und Figur 10 sind zudem zwei weitere Ausführungsbeispiele eines Abscheideelements 102; 104 gemäß der vorliegenden Erfindung, die nach dem Verfahren gemäß der vorliegenden Erfindung hergestellt sind, gezeigt. Zur Vermeidung überflüssiger Wiederholungen beziehen sich die nachfolgenden Erläuterungen hinsichtlich der Ausgestaltungen, Merkmale und Vorteile der vorliegenden Erfindung (soweit nicht anderweitig angegeben) sowohl auf das als Koaleszenz-Abscheiderelement 100 ausgebildete erste Ausführungsbeispiel als auch auf das als Vorabscheiderelement 102 ausgebildete zweite Ausführungsbeispiel als auch auf das als Nachabscheiderelement 104 ausgebildete dritte Ausführungsbeispiel.

Das quaderförmige oder kastenförmige Abscheideelement 100 dient zum Abscheiden von Ölaerosolpartikeln aus Rohgas, nämlich von öl- und/oder emulsionsbasierten Kühlschmiermittelaerosolpartikeln aus der Abluft mindestens einer Fertigungsmaschine oder Bearbeitungsmaschine, wobei die Abluft zum Beispiel beim Bohren, Drehen, Fräsen oder Schleifen, entsteht.

In Figur 9 ist ein erstes Ausführungsbeispiel für ein Filtersystem 200 nach der vorliegenden Erfindung gezeigt. Dieses Filtersystem 200 ist dazu ausgelegt, die Raumluft einer ganzen Fertigungshalle, also die Abluft mehrerer Fertigungsmaschinen, zu reinigen. Zu diesem Zweck weist das Filtersystem 200 mehrere Abscheideelemente 100 102 104 auf, welche in regalartigen Schubladenfächern in Strömungsrichtung aufeinander folgend übereinander angeordnet sind. Alternativ kann das Abscheideelement 100 aber auch in ein Filtersystem 202 eingesetzt werden, das nur einer Fertigungsmaschine zugeordnet ist, wie beispielsweise in Figur 10 gezeigt. Zur Vermeidung überflüssiger Wiederholungen beziehen sich die nachfolgenden Erläuterungen hinsichtlich der Ausgestaltungen, Merkmale und Vorteile der vorliegenden Erfindung (soweit nicht anderweitig angegeben) sowohl auf das in Figur 9 dargestellte Filtersystem 200 als auch auf das in Figur 10 dargestellte Filtersystem 202.

Das mit Aerosolpartikeln beladene Rohgas wird aus der Fertigungshalle abgesaugt und strömt über einen Rohgaseinlass 42 in das Gehäuse 40 des Filtersystems 200;202 ein. Die Strömungsrichtung im Filtersystem 200; 202 ist in den Figuren 9 und 10 mittels Blockpfeilen dargestellt.

Im Filtersystem 200; 202 kann das Rohgas durch Abscheideelemente 100 102 104 mit unterschiedlichen Filtermedien geführt werden, beispielsweise durch
- ein Vorabscheiderelement 102, etwa mit einem Filtermedium aus Drahtgestrick 48, zum Abscheiden grober Schmutzpartikel,
- mindestens ein als Vorabscheider, als Hauptabscheider oder als Nachabscheider ausgebildetes Koaleszenz-Filterelement 100 mit mindestens einem nach dem Koaleszenz-Prinzip arbeitenden, beispielsweise mehrfach gefalteten, Filtermedium zum Abscheiden von Ölaerosolpartikeln aus Luft, und
- ein Nachabscheiderelement 104, mit mindestens einem Feinfiltermedium oder Schwebstofffiltermedium, beispielsweises einem Feinfiltermedium der Filterklasse H13 (HEPA) nach DIN-EN 1822, zum Abscheiden von feinsten Partikeln wie Rauch, Bakterien, Pollen und Sporen aus dem Rohgas.
Die Feinheit der Abscheideelemente 100 102 104 im Filtersystem 200; 202 nimmt in Strömungsrichtung immer weiter zu, sodass zunächst gröbere, dann feine und anschließend sehr feine Partikel aus der Abluft abgetrennt werden.

Die Hauptfunktion des in Figur 1 gezeigten Abscheideelements 100 ist die Aerosolabscheidung. Abgeschiedene Flüssigkeit, die nach dem Koaleszenz-Prinzip im Koaleszenz-Filtermedium aus feinen Aerosolpartikeln zu größeren Tropfen anwächst und der Schwerkraft folgend nach unten abtropft, wird gesammelt und wieder den Vorräten für die Kühlschmierstoffe zugeführt. Zum Sammeln der abgeschiedenen Flüssigkeit ist in einem der Schwerkraft folgenden unteren Bereich des Gehäuses 40 ein Sammelvolumen 74 angeordnet. Von dort kann die gesammelte Flüssigkeit abgepumpt oder mittels eines Absperrhahns abgeleitet werden.

Im gereinigten Zustand verlässt das Rohgas das Gehäuse 40 über mindestens einen Reingasauslass 44 und wird zurück in den Raum oder nach Außen in die Umgebung geführt.

Als Filtermedium 10 kann das Abscheideelement 100 ein Koaleszenz-Filtermedium, insbesondere ein gefaltetes synthetisches Filtermedium, beispielsweise aus Polyestervlies, oder ein gefaltetes Glasfasermedium, etwa aus Glasfaserpapier, oder eine Kombination aus synthetischem Filtermedium und Glasfasermedium aufweisen.

Um ein Kollabieren der Falten des Koaleszenz-Filtermediums 10 im Betrieb des Abscheideelementes 100 zu verhindern, werden die Falten des Koaleszenz-Filtermediums 10 jeweils mittels Abstandshaltern 20 voneinander beabstandet. Das in Figur 1 gezeigte Abscheideelement 100 weist als Abstandshalter 20 ein Zellulosefiltermedium auf, welches derart ausgebildet, insbesondere sinusartig gewellt oder zickzackförmig gefaltet und/oder mit Harz beschichtet oder imprägniert, ist, dass es auch im mit Öl beladenen Zustand noch formstabil ist. Beispielsweise können die Abstandshalter 20 aus zickzackförmig gefaltetem, harzimprägniertem Filterpapier sein. Alternativ oder ergänzend zu Zellulosefiltermedium können die Abstandshalter auch Presspappe oder gepresstes Fasermaterialien aus Holz, etwa aus mitteldichter Holzfaserplatte (MDF), und/oder aus Bambus und/oder aus Stroh und/oder aus Kokosnuss aufweisen. Diese Materialien haben den Vorteil, dass sie ein geringes Gewicht aufweisen und veraschbar sind.

Das Filtermedium 10 des in Figur 1 gezeigten Abscheideelements 100 ist in einen quaderförmigen Rahmen 30 eingesetzt. Dieser Rahmen 30 dient der Handhabung des Abscheideelementes 100, beispielsweise beim Einsetzen in das Filtersystem 200; 202. Zudem stützt der Rahmen 30 das Koaleszenz-Filtermedium 10 und verhindert, dass dieses aufgrund des Gewichts durch die Ölabsorption während dem Betrieb des Koaleszenz-Filtermediums 10 auseinanderfällt.

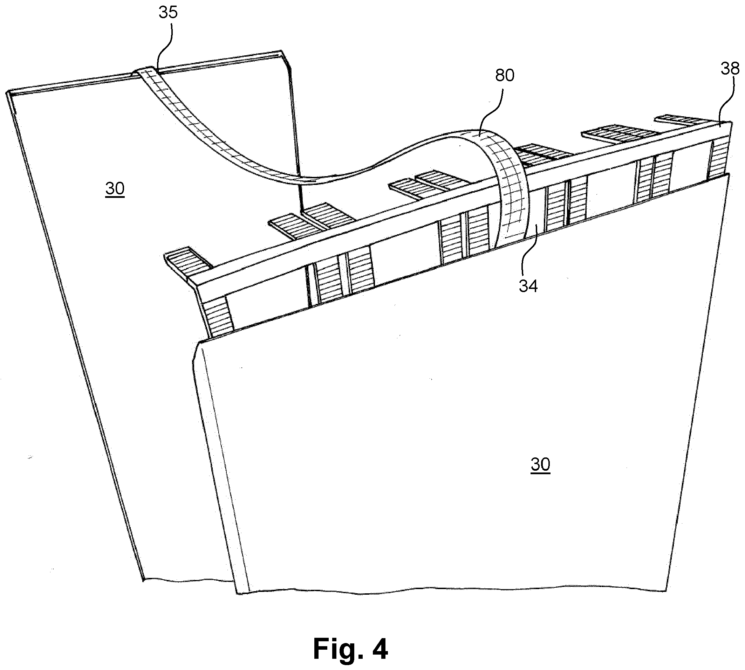

Der Rahmen des in Figur 1 gezeigten Abscheideelements 100 ist aus rechteckigen Seitenflächen zusammengesetzt. Diese Seitenflächen weisen, wie in den Figuren 4 bis 6 dargestellt, an zwei einander gegenüberliegenden Enden der Seitenflächen abgekantete Eckbereiche 38 auf. Diese Eckbereiche 38 einer Rahmenseitenfläche sind jeweils mittels mindestens einem als Steckverbindungselement ausgebildeten Adapterelement, nämlich einem Eckverbinder, (nicht gezeigt) mit dem Eckbereich 38 einer anderen Rahmenseitenfläche verbindbar. Die Eckverbinder sind vorteilhafterweise in einem Hohlprofil des Rahmens 30 anordbar und somit im zusammengesetzten Zustand des Rahmens 30 von außen nicht sichtbar.

Ein jeweiliges Abscheideelement 100 kann beispielsweise eine Dimension von 60 cm × 60 cm × 40 cm bis 100 cm × 100 cm × 40 cm aufweisen. Im mit Öl beladenen Zustand können diese kastenförmigen Filtereelemente 100; 102; 104 etwa 40 kg bis 50 kg wiegen.

Der Verschmutzungsgrad der jeweiligen Filterelemente 100; 102; 104 des Filtersystems 200;202 ist mittels Differenzdruckanzeigen 70, 71, 72 bestimmbar. Bei einem definierten Druckverlust sollte das entsprechende Abscheideelement 100; 102; 104 gewechselt werden.

Zum Wechseln des Abscheideelements 100; 102; 104 kann dieses am Griffband 80 aus dem Gehäuse 40 des Filtersystems 200; 202 entnommen werden.

Das Griffband 80 ist derart um das Filtermedium 10 angeordnet, dass bei der Handhabung des Verbunds aus Filtermedium 10 und Rahmen 30 das Griffband 80 das Gewicht des Filtermediums 10 stützt. Das Griffband 80 stützt also das Filtermedium 10 von unten bzw. an seiner dem Boden zugewandten unteren Seite. Dabei läuft das Griffband 80 innerhalb des Hohlprofils des Rahmens 30 um das Filtermedium 10 und trägt das Gewicht des Filterelements 10 bei der Wartung des Filtersystems 200; 202.

Figur 4 zeigt den Verlauf des Griffbands 80 an der in Gebrauchsstellung des Abscheideelements 100 dem Benutzer zugewandten Vorderseite 36 des Rahmens 30. Dabei verläuft das Griffband 80 an den Seitenflächen des Rahmens 30 sowie an der Rückfläche des Rahmens 30 durch ein Hohlprofil. An der Vorderseite des Rahmens 30 liegt das Griffband 80 frei.

Figur 4 zeigt im hinteren Bereich, wie das Griffband 80 in dem Hohlprofil oder in der Hohlkammer des extrudierten Profils des Rahmens 30 verschwindet. Im vorderen Bereich der Figur 4 ist gezeigt, wie das Griffband 80 am Eckverbinder verklemmt werden wird.

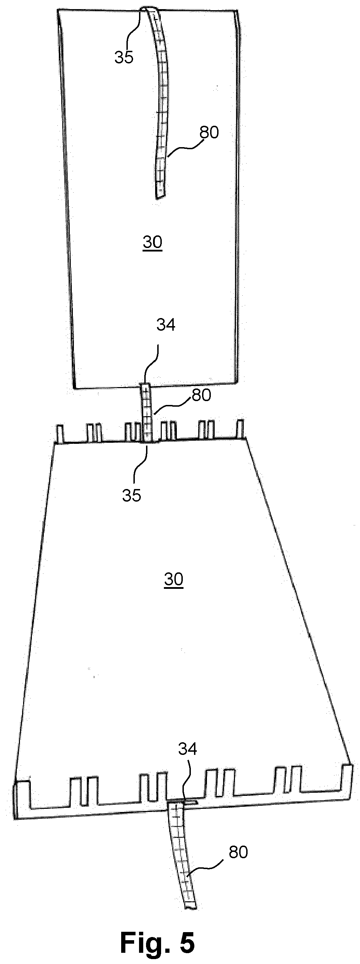

Figur 5 zeigt, wie das Griffband 80 durch die Profile des Rahmens 30 hindurch läuft, in den Bereichen, in welchen das Griffband 80 innerhalb des Rahmens angeordnet ist.

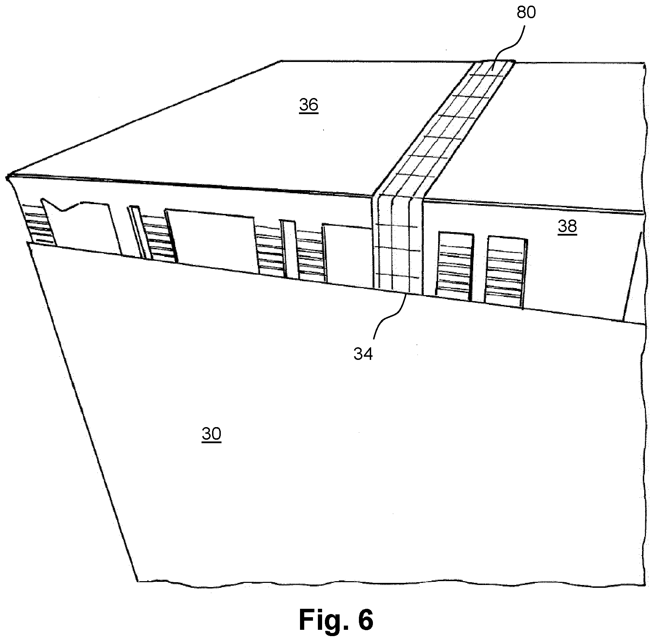

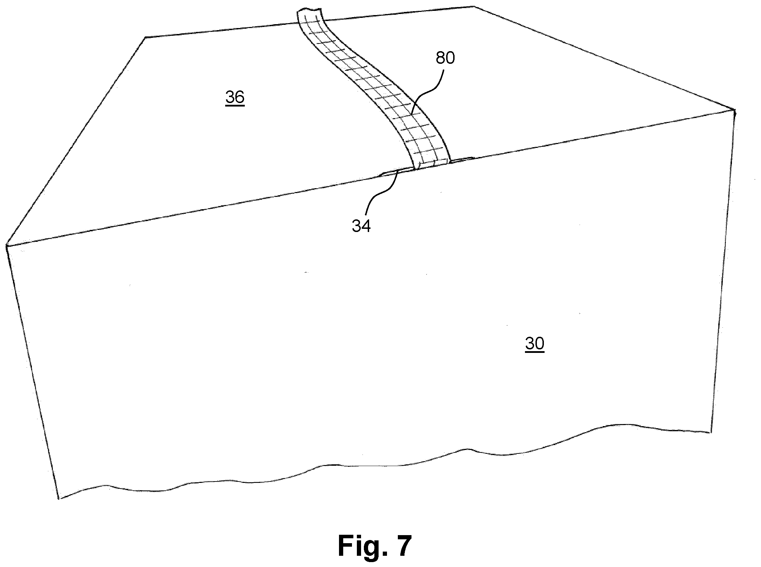

Die Figuren 6 und 7 zeigen, wie das Griffband 80 in einem Kantenbereich oder in einer Ecke des quaderförmigen Rahmens 30 eingeklemmt wird.

Das umlaufende Griffband 80 wird, nachdem es um das Filtermedium 10 angeordnet ist, mit sich selbst verbunden, beispielsweise zusammengenäht. Die Verbindungsstelle des Griffbands 80 wird vorteilhafterweise im Hohlprofil des Rahmens 30, beispielsweise im Hohlprofil der Bodenfläche des Rahmens, angeordnet und ist somit von außen nicht sichtbar.

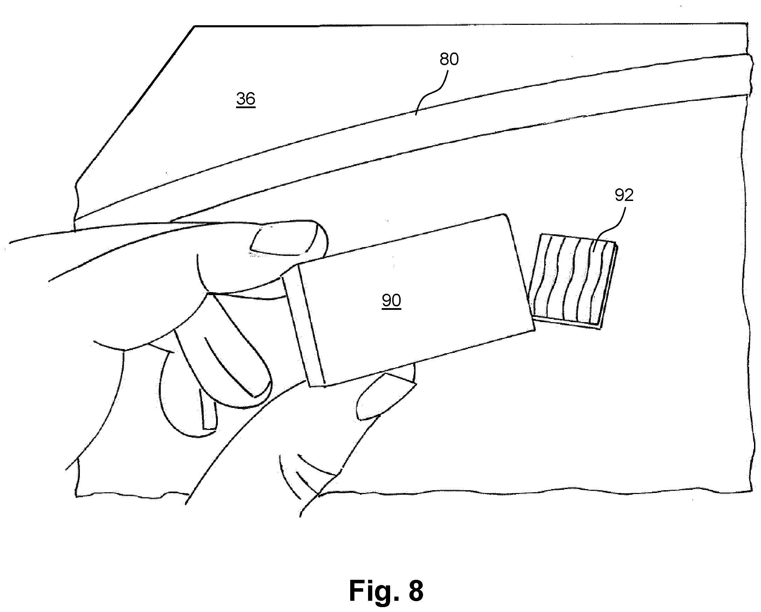

Figur 8 zeigt ein mittels eines Klettverschlusses 92 lösbar am Rahmen 30 angeordnetes Stoßfängerelement 90. Dieser abnehmbare Stoßfänger 90 kann werkzeugfrei entfernt werden. Das Stoßfängerelement 90 ist vorteilhafterweise aus veraschbarem Material.

Wie in den Figuren 1 bis 10 gezeigt, verläuft das Griffband 80 im Hohlprofil des Rahmen 30 u-förmig um das Filtermedium 10 und tritt an zwei Kantenbereichen 34, 35, welche beim Tragen des Abscheideelements oben angeordnet sind, aus dem Rahmen 30 aus und ist dort im Rahmen 30 eingeklemmt. Das Gewicht des Filtermediums wird somit von oben, nämlich von den Bereichen 34, 35 an welchem das Griffband mit dem Rahmen 30 verbunden, beispielsweise in den Rahmen 30 eingeklemmt ist, sowie von unten, nämlich von einer unteren Seite des Rahmens, durch deren Hohlprofil das Griffband läuft, getragen. Dieses innen umlaufende Griffband 80 verleiht dem Abscheideelement 100; 102; 104 eine besonders gute Stabilität.

### Bezugszeichenliste

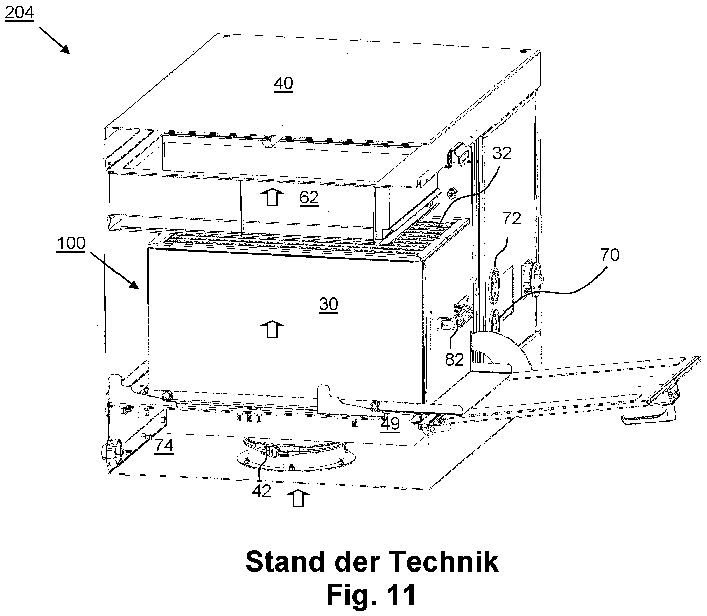

- 10: Filtermedium zum Abscheiden von Ölaerosolpartikeln aus Rohgas, insbesondere von öl- oder emulsionsbasierten Kühlschmiermittelaerosolpartikeln aus Rohluft, etwa von Kühlschmierstoffaerosolpartikeln und/oder von Trennmittelaerosolpartikeln aus der Abluft mindestens einer Fertigungsmaschine, beispielsweise nach dem Koaleszenz-Prinzip arbeitendes, mehrschichtiges gefaltetes Filtermedium aus synthetischem Material, beispielsweise aus Vlies, und/oder aus Glasfaser
- 12: Längsfläche oder Blatt einer Falte des Koaleszenz-Filtermediums 10
- 20: Abstandshalter oder Separator oder Spacer zum Abstützen der Längsflächen 12 oder der Blätter der Falten, insbesondere aus metallfreiem, verschbarem Material
- 30: zur Aufnahme des Filtermediums 10 ausgebildeter quaderförmiger Rahmen des Abscheideelements 100, insbesondere kassettenartiger Rahmen
- 32: Einlass- bzw. Auslassseitiges Stützgitter des Rahmens, insbesondere Anssauggitter oder Auslassgitter des Rahmens 30
- 34: Verbindungsbereich zum Verbinden des Griffbands 80 mit dem Rahmen 30 und/oder Eintrittsöffnung des Rahmens 30 an welcher das Griffband 80 von außen in den Hohlraum des Rahmens 30 geführt wird
- 35: weiterer Verbindungsbereich zum Verbinden des Griffbands 80 mit dem Rahmen 30 und/oder Austrittsöffnung des Rahmens 30 an welcher das Griffband 80 vom inneren Hohlraum des Rahmens aus nach außen geführt wird
- 36: Vorderseite des Rahmes 30
- 38: an einem Ende einer Seitenfläche des Rahmens 30 angeordneter, abgekanteter Eckbereich
- 40: schrankartiges oder regalartiges Gehäuse des Filtersystems 200; 202
- 42: Rohgaseinlass
- 44: Rohgasauslass
- 48: Vorabscheiderelement, beispielsweise Drahtgestrick, des Filtersystems 202 (vgl. Figur 10)
- 49: Vorabscheiderelement, beispielsweise Drahtgestrick, des Filtersystems 204 aus dem Stand der Technik (vgl. Figur 11)
- 60: Nachabscheiderelement, beispielsweise Feinfiltermedium der Filterklasse H13 (HEPA) nach DIN-EN 1822, des Filtersystems 202 (vgl. Figur 10)
- 62: Nachabscheiderelement, beispielsweise Feinfiltermedium der Filterklasse H13 (HEPA) nach DIN-EN 1822, des Filtersystems 204 aus dem Stand der Technik (vgl. Figur 11)
- 70: Differenzdruckanzeige, insbesondere dem ersten Abscheideelement 100 zugeordnete Differenzdruckanzeige
- 71: weitere Differenzdruckanzeige, insbesondere dem weiteren Abscheideelement 102 zugeordnete Differenzdruckanzeige
- 72: weitere Differenzdruckanzeige, insbesondere dem weiteren Abscheideelement 104 zugeordnete Differenzdruckanzeige
- 74: Sammelvolumen zur Aufnahme abgeschiedener Flüssigkeit
- 80: Griffelement, nämlich Griffband, insbesondere gurtartiges Griffband oder Gurt
- 82: Griffelement des Abscheideelementes des Filtersystems aus dem Stand der Technik (vgl. Figur 11)
- 90: Stoßfängerelement
- 92: lösbares mehrfach verwendbares Verschlusselement, insbesondere Klettverschluss
- 100: Abscheideelement, insbesondere Filterkassette, beispielsweise Tröpfchenabscheiderelement, erstes Ausführungsbeispiel mit mindestens einem Filtermedium 10, insbesondere mit mindestens einem Koaleszenz-Filtermedium aus synthetischem Material und/oder aus Glasfaser
- 102: weiteres Abscheideelement insbesondere Filterkassette, beispielsweise Tröpfchenabscheiderelement, zweites Ausführungsbeispiel mit einem als Vorabscheider ausgebildeten Filtermedium, beispielsweise aus Drahtgestrick und/oder mit einem als Vorfilterfilter ausgebildetem Koaleszenz-Filtermedium 10, beispielsweise aus grobem synthetischem Material
- 104: weiteres Abscheideelement insbesondere Filterkassette, beispielsweise Tröpfchenabscheiderelement, drittes Ausführungsbeispiel mit einem als Nachabscheider ausgebildetem Filtermedium beispielsweise einem Feinfiltermedium der Filterklasse H13 (HEPA) nach DIN-EN 1822 und/oder mit einem als Feinfilter ausgeildetem Koaleszenz-Filtermedium 10, beispielsweise aus feinem synthetischem Material und/oder aus feiner Glasfaser
- 200: Filtersystem oder Abscheider zum Abscheiden von Öl und/oder Ölaerosol aus der Abluft mindestens einer Fertigungsmaschine insbesondere einer zerspanenden Fertigungsmaschine (erstes Ausführungsbesipiel der vorliegenden Erfindung; vgl. Figur 9)
- 202: Filtersystem oder Abscheider zum Abscheiden von Öl und/oder Ölaerosol aus der Abluft mindestens einer Fertigungsmaschine insbesondere einer zerspanenden Fertigungsmaschine (zweites Ausführungsbesipiel der vorliegenden Erfindung; vgl. Figur 10)
- 204: Filtersystem oder Abscheider zum Abscheiden von Öl und/oder Ölaerosol aus der Abluft mindestens einer Fertigungsmaschine insbesondere einer zerspanenden Fertigungsmaschine (Stand der Technik; vgl. Figur 11)

## Patentansprüche

1. Abscheideelement (100; 102; 104) zum Abscheiden von Ölaerosolpartikeln aus Rohgas, wobei das Abscheideelement (100; 102; 104)
- mindestens ein Filtermedium (10), insbesondere mindestens ein mehrfach, beispielsweise zickzackförmig, gefaltetes Koaleszenz- Filtermedium,
- mindestens einen quaderförmigen Rahmen (30) zur Aufnahme des Filtermediums (10), und
- mindestens ein zur Handhabung des Verbunds aus Filtermedium (10) und Rahmen (30) ausgebildetes Griffelement (80), welches an einer in Gebrauchsstellung des Abscheideelements (100; 102; 104) dem Benutzer zugewandten Vorderseite (36) des Rahmens (30) angeordnet ist,
aufweist,
**dadurch gekennzeichnet, dass**
das Griffelement (80) mindestens ein langes, schmales, geschlossenes Griffband (80) ist, welches sowohl an der Vorderseite (36) des Rahmens (30) angeordnet ist, als auch derart um das Filtermedium (10) angeordnet ist, dass bei der Handhabung des Verbunds aus Filtermedium (10) und Rahmen (30) das Griffband (80) das Gewicht des Filtermediums (10) stützt.

2. Abscheideelement nach Anspruch 1, **dadurch gekennzeichnet, dass** das Griffband (80) an zwei einander gegenüberliegenden Bereichen (34, 35) der Eckbereiche (38) mindestens einer Seitenfläche des Rahmens (30), insbesondere zumindest der Rahmenvorderseite (36), mit dem Rahmen (30) verbunden ist, insbesondere in den Rahmen eingespannt oder eingeklemmt ist.

3. Abscheideelement nach mindestens einem der Ansprüche 1 oder 2, **dadurch gekennzeichnet, dass** der Rahmen (30) ein Hohlprofil mit mindestens einem inneren Hohlraum aufweist, wobei das Griffband (80) zumindest bereichsweise innerhalb des Hohlraums um das Filtermedium (10) herum verläuft.

4. Abscheideelement nach Anspruch 3, **dadurch gekennzeichnet, dass**
- der Rahmen (30) mindestens eine Austrittsöffnung (35) aufweist, an welcher das Griffband (80) vom inneren Hohlraum des Rahmens aus nach außen tritt, und mindestens eine Eintrittsöffnung (34) aufweist, an welcher das Griffband (80) von außen in den Hohlraum des Rahmens (30) eintritt, wobei die Austrittsöffnung (35) und die Eintrittsöffnung (34) an zwei einander gegenüberliegenden Bereichen (34, 35) der Eckbereiche (38) mindestens einer Seitenfläche des Rahmens (30) angeordnet sind, und
- der außerhalb des Rahmens (30) angeordnete Bereich des Griffbands (80) zum Greifen des Griffbands (80) ausgebildet ist.

5. Abscheideelement nach Anspruch 1 bis 4, **dadurch gekennzeichnet, dass** der Rahmen (30) aus einzelnen, insbesondere mittels mindestens einer formschlüssigen Verbindung, lösbar miteinander verbindbaren Seitenflächen zusammengesetzt ist.

6. Abscheideelement nach Anspruch 5, **dadurch gekennzeichnet, dass** der Rahmen (30) zum Verbinden seiner Seitenflächen mindestens ein Adapterelement aufweist, das zwei rechtwinklig zueinander angeordnete Enden aufweist, die jeweils mit einer Rahmenseitenfläche zur Herstellung einer formschlüssigen Verbindung, beispielsweise einer Schnappverbindung oder einer Clipverbindung, in Eingriff bringbar sind.

7. Abscheideelement nach Anspruch 1 bis 6, **dadurch gekennzeichnet, dass** der Rahmen (30) aus Kunststoff, insbesondere aus Polystyrol, beispielsweise aus extrudiertem Kunststoff, etwa aus extrudiertem Polystyrol, ist.

8. Abscheideelement nach Anspruch 1 bis 7, **dadurch gekennzeichnet, dass** der Rahmen (30) sowie das Griffband (80) aus veraschbarem Material gebildet sind, insbesondere, dass das Griffband (80) aus Textilmaterial und der Rahmen (30) aus Kunststoff gebildet ist.

9. Abscheideelement nach Anspruch 1 bis 8, **dadurch gekennzeichnet, dass** das Abscheideelement (100; 102; 104) aus veraschbarem Material gebildet ist, insbesondere dass das Filtermedium (10) aus synthetischem Material, beispielsweise aus Vlies, und/oder aus glasfaserhaltigem Material ist.

10. Filtersystem (200; 202) zur Abscheidung von Ölaerosolpartikeln aus Rohgas, insbesondere von öl- oder emulsionsbasierten Kühlschmiermittelaerosolpartikeln aus der Abluft mindestens einer Fertigungsmaschine, aufweisend
- ein Gehäuse (40) mit einem Rohgaseinlass (42) zum Einlassen von mit Ölaerosolpartikeln beladenem Rohgas und einen Reingasauslass (44) zum Auslassen von durch das Filtersystem (200;202) gereinigtem Reingas, und
- mindestens ein im Strömungsweg zwischen dem Rohgaseinlass (42) und dem Reingasauslass (44) angeordnetes Abscheideelement (100; 102; 104) nach mindestens einem der Ansprüche 1 bis 9.

11. Verfahren zur Herstellung eines Abscheideelements (100; 102; 104) zum Abscheiden von Ölaerosolpartikeln aus Rohgas, wobei
- mindestens ein Filtermedium (10), insbesondere mindestens ein mehrfach, beispielsweise zickzackförmig, gefaltetes Koaleszenz- Filtermedium, in einen quaderförmigen Rahmen (30) eingesetzt wird und
- ein zur Handhabung des Verbunds aus Filtermedium (10) und Rahmen (30) ausgebildetes Griffelement (80) am einer in Gebrauchsstellung des Abscheideelements (100; 102; 104) dem Benutzer zugewandten Vorderseite (36) des Rahmens (30) angeordnet wird,
**dadurch gekennzeichnet, dass**
als Griffelement (80) mindestens ein langes, schmales, geschlossenes Griffband (80) derart angeordnet wird, dass es sowohl an der Vorderseite (36) des Rahmens (30) angeordnet ist, auch um das Filtermedium (10) verläuft und bei der Handhabung des Verbunds aus Filtermedium (10) und Rahmen (30) das Gewicht des Filtermediums (10) stützt.

12. Verfahren nach Anspruch 11, **dadurch gekennzeichnet, dass**
- der Rahmen (30) aus einzelnen, insbesondere mittels einer Steckverbindung, lösbar miteinander verbindbaren Seitenflächen zusammengesetzt wird und
- das Griffband (80) an zwei einander gegenüberliegenden Kantenbereichen (34, 35) des Rahmens (30) befestigt wird, insbesondere dass das Griffband (80) an zwei einander gegenüberliegenden Kantenbereichen (34, 35) des Rahmens (30) jeweils zwischen zwei benachbarten Seitenflächen des Rahmens (30) eingespannt oder eingeklemmt wird.

13. Verfahren nach Anspruch 11 oder 12, **dadurch gekennzeichnet, dass** das Griffband (80)
- innerhalb des Hohlraums des Rahmens (30) um das Filtermedium (10) herum angeordnet wird,
- an einer Austrittsöffnung (35) des Rahmens vom inneren Hohlraum des Rahmens aus nach außen geführt wird und
- an einer Eintrittsöffnung (34) des Rahmens von außen in den Hohlraum des Rahmens (30) hinein geführt wird.

14. Verwendung mindestens eines Abscheideelementes (100; 102; 104) nach mindestens einem der Ansprüche 1 bis 9 und /oder mindesten eines nach Anspruch 11 oder 12 hergestelltes Abscheideelementes (100; 102; 104) in einem Filtersystem nach Anspruch 10 zum Abscheiden von Öl und/oder Ölaerosol aus der Abluft mindestens einer Fertigungsmaschine, insbesondere einer zerspanenden Fertigungsmaschine.

## Claims

1. A separating element (100; 102; 104) for separating oil aerosol particles from raw gas, wherein the separating element (100; 102; 104) features
- at least one filter medium (10), in particular at least one coalescence filter medium folded several times, for example in a zigzag shape,
- at least one cuboid-shaped frame (30) for accommodating the filter medium (10), and
- at least one grip element (80) designed for handling the combination of filter medium (10) and frame (30), said grip element being disposed on a front side (36) of the frame (30) facing the user in the position of use of the separating element (100; 102; 104),
**characterized in that**
the grip element (80) is at least one long, narrow, closed grip band (80), which is both disposed on the front side (36) of the frame (30) and also disposed around the filter medium (10) in such a way that, when handling the combination of filter medium (10) and frame (30), the grip band (80) supports the weight of the filter medium (10).

2. The separating element according to claim 1, **characterized in that** the grip band (80) is connected to the frame (30) at two opposing areas (34, 35) of the corner areas (38) of at least one lateral surface of the frame (30), in particular at least the front side of the frame (36), in particular is fixed or clamped in the frame.

3. The separating element according to at least one of the claims 1 or 2, **characterized in that** the frame (30) features a hollow profile having at least one inner hollow space, wherein the grip band (80) extends around the filter medium (10) at least in some areas inside the hollow space.

4. The separating element according to claim 3, **characterized in that**
- the frame (30) features at least one outlet port (35) at which the grip band (80) exits from the inner hollow space of the frame to the outside, and features at least one inlet port (34) at which the grip band (80) enters the hollow space of the frame (30) from the outside, wherein the outlet port (35) and the inlet port (34) are disposed at two opposing areas (34, 35) of the corner areas (38) of at least one lateral surface of the frame (30), and
- the area of the grip band (80) disposed outside the frame (30) is designed for gripping the grip band (80).

5. The separating element according to claim 1 to 4, **characterized in that** the frame (30) is composed of individual lateral surfaces which are detachably connectable to one another, in particular using at least one positive-locking connection.

6. The separating element according to claim 5, **characterized in that** the frame (30) features at least one adapter element for connecting its lateral surfaces, which features two ends disposed at right angles to one another, each of which can be brought into engagement with a frame lateral surface to enable a positive engagement connection, for example a snap-fit connection or a clip connection.

7. The separating element according to claim 1 to 6, **characterized in that** the frame (30) is made of plastic, in particular of polystyrene, for example of extruded plastic, for example of extruded polystyrene.

8. The separating element according to claim 1 to 7, **characterized in that** the frame (30) and the grip band (80) are made of incinerable material, in particular in that the grip band (80) is made of textile material and the frame (30) is made of plastic material.

9. The separating element according to claim 1 to 8, **characterized in that** the separating element (100; 102; 104) is made of incinerable material, in particular in that the filter medium (10) is made of synthetic material, for example of nonwoven fabric, and/or of material containing glass fibers.

10. A filter system (200; 202) for separating oil aerosol particles from raw gas, in particular oil- or emulsion-based cooling lubricant aerosol particles from the exhaust air of at least one manufacturing machine, featuring
- a housing (40) having a raw gas inlet (42) for admitting raw gas loaded with oil aerosol particles and a clean gas outlet (44) for discharging clean gas purified through the filter system (200; 202), and
- at least one separating element (100; 102; 104) disposed in the flow path between the raw gas inlet (42) and the clean gas outlet (44), according to at least one of the claims 1 to 9.

11. A method for manufacturing a separating element (100; 102; 104) for separating oil aerosol particles from raw gas, wherein
- at least one filter medium (10), in particular at least one coalescence filter medium folded several times, for example in a zigzag shape, is inserted into a cuboid-shaped frame (30) and
- a grip element (80) designed for handling the combination of filter medium (10) and frame (30) is disposed on a front side (36) of the frame (30) facing the user in the position of use of the separating element (100; 102; 104),
**characterized in that**
at least one long, narrow, closed grip band (80) is disposed as a grip element (80) in such a way that it is disposed both on the front side (36) of the frame (30) and also extends around the filter medium (10) and supports the weight of the filter medium (10) during handling of the combination of filter medium (10) and frame (30).

12. The method according to claim 11, **characterized in that**
- the frame (30) is composed of individual lateral surfaces detachably connectable to one another, in particular using a plug-in connection and
- the grip band (80) is attached to two mutually opposing edge areas (34, 35) of the frame (30), in particular that the grip band (80) is fixed or clamped between two neighboring lateral surfaces of the frame (30) at two mutually opposing edge areas (34, 35) of the frame (30) respectively.

13. The method according to claim 11 or 12, **characterized in that** the grip band (80)
- is disposed inside the hollow space of the frame (30) around the filter medium (10),
- is guided outwardly from the inner hollow space of the frame at an outlet port (35) of the frame and
- is guided into the hollow space of the frame (30) from the exterior at an inlet port (34) of the frame.

14. A use of at least one separating element (100; 102; 104) according to at least one of claims 1 to 9 and/or at least one separating element (100; 102; 104) manufactured according to claim 11 or 12 in a filter system according to claim 10 for separating oil and/or oil aerosol from the exhaust air of at least one manufacturing machine, in particular a cutting manufacturing machine.

## Revendications

1. Élément de séparation (100; 102; 104) destiné à séparer des particules d'aérosols d'huile de gaz brut, l'élément de séparation (100; 102; 104) présentant
- au moins un milieu filtrant (10), notamment au moins un milieu filtrant de coalescence plié à plusieurs reprises, par exemple en accordéon,
- au moins un cadre parallélépipédique (30) servant à réceptionner l'élément filtrant (10), et
- au moins un élément de préhension (80) réalisé pour utiliser l'ensemble constitué du milieu filtrant (10) et du cadre (30), ledit élément de préhension étant disposé sur une face avant (36) du cadre (30) dirigée vers l'utilisateur lorsque l'élément de séparation (100; 102; 104) est en position d'utilisation,
**caractérisé en ce que**
l'élément de préhension (80) est au moins une bande de poignée (80) longue, étroite et fermée qui est disposée aussi bien sur la face avant (36) du cadre (30), mais aussi autour du milieu filtrant (10), de manière à ce que, lors de l'utilisation de l'ensemble constitué du milieu filtrant (10) et du cadre (30), la bande de poignée (80) soutienne le poids du milieu filtrant (10).

2. Élément de séparation selon la revendication 1, **caractérisé en ce que la** bande de poignée (80) est reliée, à deux zones opposées l'une à l'autre (34, 35) des coins (38) d'au moins une surface latérale du cadre (30), notamment au moins de la face avant du cadre (36), au cadre (30), notamment tendue ou serrée dans le cadre.

3. Élément de séparation selon au moins l'une quelconque des revendications 1 ou 2, **caractérisé en ce que** le cadre (30) présente un profil creux ayant au moins un espace creux intérieur, la bande de poignée (80) entourant le milieu filtrant (10), au moins dans certaines sections, au sein de l'espace creux.

4. Élément de séparation selon la revendication 3, **caractérisé en ce que**
- le cadre (30) présente au moins une ouverture de sortie (35) au niveau de laquelle la bande de poignée (80) sort de l'espace creux intérieur du cadre vers l'extérieur, et au moins une ouverture d'entrée (34) au niveau de laquelle la bande de poignée (80) entre de l'extérieur dans l'espace creux intérieur du cadre (30), l'ouverture de sortie (35) et l'ouverture d'entrée (34) étant disposées à deux zones opposées l'une de l'autre (34, 35) des coins (38) d'au moins une surface latérale du cadre (30), et
- la partie de la bande de poignée (80) située en dehors du cadre (30) est exécutée pour saisir la bande de poignée (80).

5. Élément de séparation selon la revendication 1 à 4, **caractérisé en ce que** le cadre (30) se compose de surfaces latérales individuelles pouvant être reliées entre elles de manière amovible, notamment au moyen d'un assemblage craboté.

6. Élément de séparation selon la revendication 5, **caractérisé en ce que** le cadre (30) présente, pour la liaison de ses surfaces latérales, au moins un élément adaptateur présentant deux extrémités perpendiculaires l'une par rapport à l'autre qui peuvent être engrenées respectivement avec une surface latérale du cadre afin de créer un assemblage craboté, par exemple un assemblage par encliquetage ou un assemblage par clipsage.

7. Élément de séparation selon la revendication 1 à 6, **caractérisé en ce que** le cadre (30) est en matière plastique, notamment en polystyrène, par exemple en une matière plastique extrudée, par exemple en polystyrène extrudé.

8. Élément de séparation selon la revendication 1 à 7, **caractérisé en ce que** le cadre (30) et la bande de poignée (80) sont réalisés en un matériau incinérable, notamment que la bande de poignée (80) est réalisée en un matériau textile et que le cadre (30) est réalisé en matière plastique.

9. Élément de séparation selon la revendication 1 à 8, **caractérisé en ce que** l'élément de séparation (100; 102; 104) est réalisé en un matériau incinérable, notamment que le milieu filtrant (10) est réalisé en un matériau synthétique, par exemple en non-tissé, et/ou en un matériau à base de fibres de verre.

10. Système de filtre (200; 202) destiné à séparer des particules d'aérosols d'huile de gaz brut, notamment de particules d'aérosols de lubrifiant réfrigérant à base d'huile ou d'émulsion, de l'air évacué d'au moins une machine de fabrication, présentant
- un boîtier (40) ayant une entrée de gaz brut (42) permettant l'entrée de gaz brut chargé de particules d'aérosols d'huile et une sortie de gaz pur (44) permettant la sortie de gaz pur purifié par le système de filtre (200; 202), et
- au moins un élément de séparation (100; 102; 104) selon au moins l'une quelconque des revendications 1 à 9 disposé dans le trajet d'écoulement entre l'entrée de gaz brut (42) et la sortie de gaz pur (44).

11. Procédé de fabrication d'un élément de séparation (100; 102; 104) destiné à séparer des particules d'aérosols d'huile de gaz brut,
- au moins un milieu filtrant (10), notamment au moins un milieu filtrant de coalescence multiple, par exemple plié en accordéon, étant inséré dans un cadre parallélépipédique (30) et
- un élément de préhension (80) réalisé pour utiliser l'ensemble constitué du milieu filtrant (10) et du cadre (30) étant disposé sur une face avant (36) du cadre (30) dirigée vers l'utilisateur lorsque l'élément de séparation (100; 102; 104) est en position d'utilisation,
**caractérisé en ce que**
en tant qu'élément de préhension (80), au moins une bande de poignée (80) longue, étroite et fermée est disposée aussi bien sur la face avant (36) du cadre (30), mais aussi autour du milieu filtrant (10), et soutient le poids du milieu filtrant (10) lors de l'utilisation de l'ensemble constitué du milieu filtrant (10) et du cadre (30).

12. Procédé selon la revendication 11, **caractérisé en ce que**
- le cadre (30) se compose de surfaces latérales individuelles pouvant être reliées entre elles de manière amovible, notamment au moyen d'un raccordement enfichable, et
- la bande de poignée (80) est fixée à deux zones de bordure opposées l'une à l'autre (34, 35) du cadre (30), notamment que la bande de poignée (80) est tendue ou serrée à deux zones de bordure opposées l'une à l'autre (34, 35) du cadre (30), respectivement entre deux surfaces latérales voisines du cadre (30).

13. Procédé selon la revendication 11 ou 12, **caractérisé en ce que** la bande de poignée (80)
- entoure le milieu filtrant (10) disposé au sein de l'espace creux du cadre (30),
- sort de l'espace creux intérieur du cadre vers l'extérieur au niveau d'une ouverture de sortie (35) du cadre et
- entre de l'extérieur dans l'espace creux du cadre (30) au niveau d'une ouverture d'entrée (34) du cadre.

14. Utilisation d'au moins un élément de séparation (100; 102; 104) selon au moins l'une quelconque des revendications 1 à 9 et/ou d'au moins un élément de séparation (100; 102; 104) fabriqué selon la revendication 11 ou 12 dans un système de filtre selon la revendication 10 destiné à séparer de l'huile et/ou des aérosols d'huile de l'air évacué d'au moins une machine de fabrication, notamment d'une machine de fabrication par enlèvement de copeaux.
